Europäisches Patentamt

European Patent Office

Office européen des brevets

(19)

(11) Veröffentlichungsnummer: **0 253 131 B1**

# EUROPÄISCHE PATENTSCHRIFT

(12)

(45) Veröffentlichungstag der Patentschrift: **20.05.92**

(51) Int. Cl.5: **C01B 13/11**

(21) Anmeldenummer: **87108267.3**

(22) Anmeldetag: **08.06.87**

Die Akte enthält technische Angaben, die nach dem Eingang der Anmeldung eingereicht wurden und die nicht in dieser Patentschrift enthalten sind.

(54) **Verfahren zur Erzeugung von Ozon.**

(30) Priorität: **03.07.86 CH 2680/86**

(43) Veröffentlichungstag der Anmeldung:
**20.01.88 Patentblatt 88/03**

(45) Bekanntmachung des Hinweises auf die Patenterteilung:
**20.05.92 Patentblatt 92/21**

(84) Benannte Vertragsstaaten:
**AT CH DE FR GB IT LI**

(56) Entgegenhaltungen:
**DE-A- 3 220 018**
**DE-A- 3 427 274**
**DE-A- 3 430 011**
**US-A- 2 872 397**

(73) Patentinhaber: **Ozonia AG**
**Schaffhauserstrasse 418**
**CH-8050 Zürich(CH)**

(72) Erfinder: **Erni, Peter, E., Dr.**
**Römerstrasse 34**
**CH-5400 Baden(CH)**
Erfinder: **Fischer, Melch, Dr.**
**Breitenweg 509**
**CH-8966 Lieli(CH)**
Erfinder: **Gaia, Franco**
**Rossee**
**CH-6987 Caslano(CH)**
Erfinder: **Gaiffi, Nazareno L.**
**Winterhaldenstrasse 60**
**CH-5300 Turgi(CH)**
Erfinder: **Kogelschatz, Ulrich, Dr.**
**Obere Parkstrasse 8**
**CH-5212 Hausen(CH)**

(74) Vertreter: **Ottow, Jens M. et al**
**Asea Brown Boveri AG Abteilung REI-Immaterialgüterrecht**
**CH-5401 Baden(CH)**

EP 0 253 131 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Technisches Gebiet

Die Erfindung bezieht sich auf eine Einrichtung zur Erzeugung von Ozon. Insbesondere betrifft sie eine Einrichtung zur Erzeugung von Ozon mit einem elektrischen Ozonerzeuger, durch dessen Entladungsspalte ein Stickstoff und Sauerstoff enthaltendes Einsatzgas hindurchleitbar ist und Mittel zur Kühlung der den Entladungsspalt begrenzenden Elektroden umfasst.

Die Erfindung nimmt dabei Bezug auf einen Stand der Technik, wie er sich beispielsweise aus der deutschen Offenlegungsschrift 34 27 274 ergibt.

Stand der Technik

Der zunehmende Einsatz von Ozon in Industrie, Wasser-und Abwasserwirtschaft bringt ein wachsendes Bedürfnis nach Ozonerzeugungsanlagen mit sich, die große Mengen Ozon erzeugen können und dies auf möglichst wirtschaftliche Weise.

Dabei muss der eigentliche Ozonerzeuger in möglichst optimaler Weise in die Gesamtanlage integriert sein. Dies kann durchaus dazu führen, dass z.B. der Ozonerzeuger für sich genommen unter nicht ganz optimalen Bedingungen, z.B. Wirkungsgrad, Druck etc., betrieben werden kann, weil andere Prozessgrößen am Eingang oder Ausgang des Ozonerzeugers hingenommen werden müssen.

Mit stillen elektrischen Entladungen arbeitende Ozonisatoren erzeugen bei Speisung mit Sauerstoff - verglichen mit Luft - mehr als die doppelte Menge an Ozon, wodurch die Kapitalkosten der für die Koronaentladung erforderlichen Anlage vermindert werden. Die zum Erzeugen eines vorgegebenen Gewichts an Ozonprodukt benötigte Energie wird um mehr als die Hälfte gesenkt, was die Betriebskosten des Generators herabsetzt. Die erzielbare höchste Ozonkonzentration wird ungefähr um den Faktor 2 erhöht, wenn mit Sauerstoff von einer Reinheit von 90 % und mehr, vorzugsweise 95 %, gearbeitet wird (vgl. DE-OS 34 27 274).

Die Produktionskosten des sauerstoffreichen Einsatzgasstromes für eine kontinuierliche Ozonerzeugungsanlage sind so hoch, dass der größte Teil des durch die Ozonerzeugungsanlage hindurchgeleiteten Sauerstoffs wiedergewonnen und zurückgeleitet werden muss, um das Verfahren wirtschaftlich zu gestalten. Ein Verfahren zum Wiedergewinnen und Rückleiten von Ozon ist bekannt (US-PS 2 872 397). Dabei wird Sauerstoff unter Druck in verhältnismässig reiner Form durch einen mit einer elektrischen Entladung arbeitenden Reaktor in Ozon umgewandelt. Das erhaltene Gasgemisch, das einen größeren Anteil an Sauerstoff und einen kleineren Anteil an Ozon aufweist, wird durch ein Bett aus Adsorptionsmittel, beispielsweise Kieselgel, hindurchgeleitet. Das Ozon wird durch das Kieselgel adsorbiert; der verbleibende Sauerstoff durchläuft das Bett, um wiedergewonnen und zurückgeleitet zu werden. Der Rücklaufstrom wird kontinuierlich oder periodisch mit Sauerstoff in ausreichender Menge ergänzt, um den Sauerstoff zu kompensieren, der im Generator in Ozon umgewandelt wurde. Typischerweise werden zwei oder mehr Adsorptionseinheiten vorgesehen, so dass dann, wenn das das Adsorptionsmittel bildende Kieselgel in einem Behälter den Sättigungspunkt für die Ozonaufnahme erreicht, das ozonhaltige Gas auf andere Adsorptionseinheiten umgeschaltet werden kann. Während der ozonhaltige, sauerstoffreiche Gasstrom, der von dem Ozongenerator kommt, in der zweiten Adsorptionseinheit behandelt wird, wird das in der ersten Einheit befindliche Ozon aus dem Adsorptionsmittel abgetrennt, wobei ein Strippergas, beispielsweise Luft, Stickstoff oder ein anderes Verdünnungsgas verwendet wird, das als Träger für das Ozon wirkt. Auf diese Weise wird ein sicheres Gemisch aus Ozon und Trägergas erhalten, das sich für anschliessende chemische Reaktionen eignet.

Dieses bekannte Verfahren ist nicht ohne weiteres für die Bereitstellung von Ozon unter erhöhtem Druck anwendbar. Die Anpassung dieses Verfahrens an einer Bereitstellung von Ozon unter erhöhtem Druck würde die folgende zusätzliche Schritte bedürfen:

- Falls der Sauerstoff unter erhöhtem Druck zur Verfügung stünde, müßte er vor der Ozonerzeugung auf einen Druck von 1.6 ... 2.1 bar absolut (optimaler Druck für die Erzeugung von Ozon aus Sauerstoff) enspannt werden.
- Nach der Ozonerzeugung müßte das Ozon/Trägergas Gemisch wieder auf einen Druck von 3 ... 3.5 bar absolut verdichtet werden. Die bei der Verdichtung entstehende Wärme würde zu einem Verlust an Ozon von etwa 5-10 % trotz aufwendiger Kühlung führen.

Gegen die an sich naheliegende Möglichkeit, die Pumpe oder den Verdichter vor dem Ozonerzeuger anzuordnen spricht, dass die Ozonausbeute mit steigendem Druck merklich abnimmt.

Darstellung der Erfindung

Ausgehend vom Stand der Technik liegt der Erfindung die Aufgabe zugrunde, eine Einrichtung zur Erzeugung von Ozon anzugeben, die es ermöglicht, Ozon unter erhöhtem Druck bereitzustellen und dabei auf Druckerzeuger hinter dem Ozonerzeuger, also im ozonseitigen Teil der Anlage zu verzichten.

Die Lösung dieser Aufgabe wird erzielt durch die Kombination folgender Merkmale:

- die Spaltweite ist überall annähernd gleich gross und beträgt höchstens 1 mm,
- das Einsatzgas ist mit Sauerstoff angereicherte Luft mit 30 % bis 98 %, vorzugsweise 85 % bis 95 % Sauerstoff - der Rest ist im wesentlichen Stickstoff,
- die Leistungsdichte beträgt bei einseitiger Kühlung der Elektroden 2,5 bis 5 kW pro $m^2$ aktive Elektrodenoberfläche, bei beidseitiger Kühlung ist die Leistungsdichte um den Faktor 4 bis 5 höher,
- in Strömungsrichtung des Einsatzgases gesehen ist vor dem Ozonisator ein Druckerzeuger vorgesehen zur Aufrechterhaltung eines Druckes im Ozonerzeuger auf mindestens 2 bar absolut.

Wesentlich für die Erfindung ist dabei die angegebene Abstimmung der einzelnen Einflussgrößen aufeinander, die es erstmals ermöglicht, bei vergleichsweise geringer Einbusse an Ozonausbeute, die Wirtschaftlichkeit der Gesamtanlage zu steigern.

Die Anwendung der erfindungsgemäßen Lehre erlaubt es, teure, weil ozonbeständige Druckerzeuger (Pumpen, Verdichter etc.) am Ausgang des Ozonerzeugers zu vermeiden. Darüberhinaus wird auch der physikalisch bedingte Zerfall von Ozon und die anschliessende Rekombination von Ozon zu Sauerstoff im Druckerzeuger eliminiert, so dass die Ozonausbeute beträchtlich gesteigert wird.

Neben der wirtschaftlichen Integration des erfindungsgemässen Ozonerzeugers in Druckwechsel-(PSA-) Anlagen eröffnet sich der Erfindung eine Reihe weiterer Anwendungsgebiete, bei denen Ozon unter Druck benötigt wird, z.B. in wasser- und abwassertechnischen Anlagen, wo Ozon in Wasser oder Abwasser mittels dynamischer Mischeinrichtungen eingebracht werden muss, bei der Schlammhygienisierung oder in der Papier- und Zellstoffindustrie, wo Drucke von 4 bar oder höher benötigt werden.

## Kurze Beschreibung der Zeichnungen

Die Erfindung wird nachstehend anhand eines in der Zeichnung dargestellten Ausführungsbeispiels, einer nach dem Druckwechsel-Adsorptionsverfahren arbeitenden Ozonanlage, näher erläutert.

## Detaillierte Beschreibung der Erfindung

Gefilterte Luft wird einer Luftaufbereitungsanlage 1 zugeführt, wo sie komprimiert, gekühlt, getrocknet und von Verunreinigungen wie Kohlendioxid und Kohlenwasserstoffen befreit wird. Die so aufbereitete Luft gelangt dann in eine Tieftemperatur-Luftzerlegungsanlage 2 und wird dort in Sauerstoff und Stickstoff zerlegt. Sauerstoff- und Stickstoffgas werden über Leitungen 3, 4 einer Adsorberkolonne mit im Beispielsfall vier parallel geschalteten Kolonnen 5 bis 8 zugeführt.

Die Sauerstoff-Leitung 3 führt weiter über einen Verdichter 9 und nachgeschalteten Kühler 10 zu zwei parallel geschalteten Ozonerzeugern 11, 12, deren Ausgänge in eine Sammelleitung 13 münden, welche Sammelleitung 13 zu den Kolonnen 5 bis 8 zurückführt. Im Zuge der Sammelleitung 13 ist ein weiterer Kühler 14 vorgesehen.

Von den Kolonnen 5 bis 8 führt eine Sammelleitung 15 an den Ausgang der Anlage.

Jede der Kolonnen 5 bis 8 ist in herkömmlicher Weise aufgebaut. Sie weisen einen geschlossenen Behälter auf, der eine Packung 51, 61, 71, 81 aus Kieselgel enthält. Jeder Behälter weist einen oberen 52, 62, 72, 82 und einen weiteren Sammelraum 53, 63, 73 bzw. 83 auf. Die unteren Sammelräume sind über durch Ventile 54, 64, 74, 84 abschaltbare Leitungen mit der Sammelleitung 13 und durch Ventile 55, 65, 75 bzw. 85 abschaltbare Leitungen mit der Abfuhrleitung 15 verbunden.

In analoger Weise sind die oberen Sammelräume 52, 62, 72, 82 über Leitungen mit dazwischengeschalteten Ventilen 56, 66, 76, 86 mit der Stickstoffleitung 4 und über andere Leitungen mit Ventilen 57, 67, 77, 87 mit der Sauerstoffleitung 3 verbunden.

Eine alle vier oberen Sammelräume 52, 62, 72, 82 verbindende Leitung 16 mit Ventilen 58, 68, 78 bzw. 88 dient zur Herstellung des Druckausgleichs zwischen den Behältern.

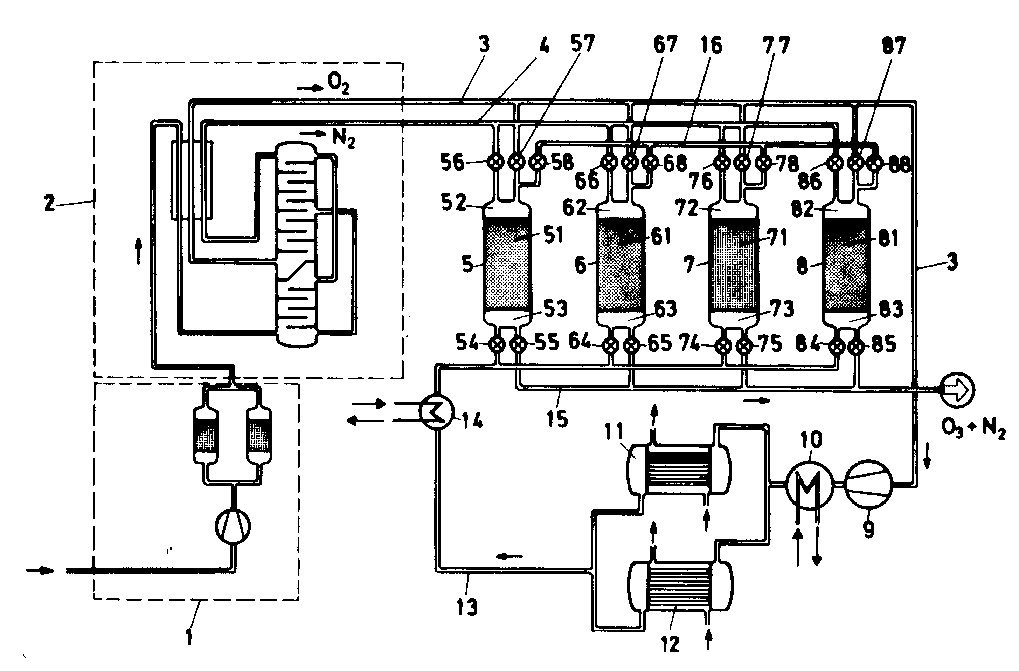

Die Ozonerzeuger 11, 12 sind gleichfalls in herkömmlicher Weise aufgebaut. Ihr Aufbau und Wirkungsweise sind beispielsweise in der deutschen Offenlegungsschrift 32 20 018, insbesondere Fig. 9 (Ozonerzeuger mit einseitiger Kühlung) oder der deutschen Offenlegungsschrift 34 27 263, insbesondere Fig. 1-3 (Ozonerzeuger mit beidseitiger Kühlung) beschrieben, wobei von wesentlicher Bedeutung ist, dass die Spaltweite überall gleich und höchstens 1 mm beträgt.

Die Wirkungsweise der Ozonerzeugungsanlage wird nachstehend näher erläutert, wobei zunächst von den Adsorber-Kolonnen nur die Kolonne 5 betrieben wird. Alle den Kolonnen 6, 7 und 8 zugeordneten Ventile seien zunächst geschlossen.

Bei geschlossenen Ventilen 55, 56, 57 und 58 wird der von der Luftzerlegungsanlage gelieferte Sauerstoff den beiden Ozonerzeugern 11, 12 unter einem Druck von mindestens 2 bar absolut zugeführt und dort in bekannter Weise mit Ozon angereichert. Nach Passieren des Kühlers 14 gelangt das $O_2/O_3$-Gemisch in die Adsorber-Kolonne 5, in welcher der Ozonanteil des Gasgemisches unter Druck adsorbiert wird. Nach Oeffnen des Ventils 57 wird der nicht adsorbierte Sauerstoff über den Verdichter 9 und den Kühler 10 in die Ozonerzeuger 11 und 12 zurückgeführt. In diese wird weiterhin ein Sauerstoffanteil eingespeist, der dem Anteil des in der Ozonbildungsreaktion verbrauchten Sauerstoffs entspricht. Dieser laufend einzuspeisende Sauerstoff wird vor der Luftzerlegungsanlage 2 nachgeliefert.

Die Desorption des in der Kolonne 5 abgetrennten Ozons erfolgt mit Hilfe des in der Luftzerlegungsanlage 2 gewonnenen Stickstoffs. Zu diesem Zweck werden die Ventile 54 und 57 geschlossen, die Ventile 55 und 56 geöffnet. Das Ozon/Stickstoff-Gemisch verlässt die Anlage über die Abfuhrleitung 15 und kann dem nachgeschalteten Prozess zugeleitet werden.

Während des beschriebenen Desorptionsvorganges kann zum Beispiel die Kolonne 6 durch Oeffnen der Ventile 64 und 67 (bei geschlossenen Ventilen 65, 66 und 68) in den Adsorptionsmodus geschaltet werden.

Durch Hinzunahme weiterer Kolonnen und dementsprechender Steuerung der Ventile lässt sich auf diese Weise ein quasi kontinuierlicher Ozon/Stickstoffstrom der Anlage entnehmen, wobei die Anlage derart ausgelegt ist, dass der Ozon/Stickstoffstrom zwischen 6 und 10 Gew.-% Ozon enthält.

Die beschriebene Anlage ermöglicht in Verbindung mit dem erfindungsgemäßen Ozonerzeuger die wirtschaftliche Bereitstellung großer Ozonmengen. Weil dabei der Ozonerzeuger auf einem für das PSA-Verfahren optimalen Druckniveau betrieben wird, sind keine ansonsten notwendigen Pumpen im Ozonkreis, d.h. zwischen Ozonerzeuger und den Adsorber-Kolonnen notwendig.

Die Wirtschaftlichkeit der Gesamtanlage ist auch deshalb höher, weil die Luftzerlegungsanlage in einem Bereich betrieben werden kann bzw. a priori so ausgelegt werden kann, dass der diese Anlage verlassende Sauerstoff durchaus nicht technisch rein zu sein braucht, sondern noch einen grossen Anteil Stickstoff - bevorzugt 20 bis 5 % Gew.-% - enthalten darf. Aus diesem "Zumischen" von Stickstoff zum Einsatzgas resultiert eine Verbesserung des spezifischen Energiebedarfs des Ozonerzeugers einerseits und bringt andererseits eine Verschiebung des optimalen Drucks zur Ozonerzeugung gegen 2,5 ... 3,5 bar absolut mit sich,

wobei für eine $O_2$-Konzentration von über 80 Gew.-% und bei einseitiger Kühlung die Faustformel

$$\frac{M \cdot L}{D} \sim 80 \ldots 130$$

und bei doppelseitiger Kühlung die Faustformel

$$\frac{M \cdot L}{D} \sim 320 \ldots 650$$

gilt,
worin M der Anteil von Sauerstoff im Einsatzgas des Ozonerzeugers in Gew.-%, L den Zahlenwert der Leistungsdichte in kW pro m$^2$ aktive Elektrodenoberfläche und D den Zahlenwert des absoluten Drucks im Ozonerzeuger in bar bedeuten.

**Patentansprüche**

1. Verfahren zum Betrieb einer Ozonanlage mit einem elektrischen Ozonerzeuger, durch dessen Entladungsspalte ein Stickstoff und Sauerstoff enthaltendes Einsatzgas unter erhöhtem Druck hindurchgeleitet wird und einem Druckerzeuger im Strömungsweg des Einsatzgases, dadurch gekennzeichnet, dass das Einsatzgas 30 bis 98 Gew.%, vorzugsweise 85 bis 95 Gew.% Sauerstoff, Rest im wesentlichen Stickstoff enthält, der Ozonerzeuger eine überall annähernd gleich Spaltweite von höchstens 1 mm aufweist und bei einseitiger Kühlung der Elektroden mit einer Leistungsdichte zwischen 2,5 und 5 kW pro m$^2$ aktiver Elektrodenfläche, bei doppelseitiger Kühlung der Elektroden mit einer um den Faktor 4 bis 5 höheren Leistungsdichte betrieben wird, und dass der Druck im Ozonerzeuger durch einen Druckerzeuger, der in Strömungsrichtung des Einsatzgases gesehen vor dem Ozonerzeuger angeordnet ist, in letzterem auf einem Wert von mindestens 2 bar absolut gehalten wird.

2. Verfahren nach Anspruch 1, dadurch gekennzeichnet, dass das Produkt aus dem Zahlenwert M der SauerstoffKonzentration in Gew% im Einsatzgas und dem Zahlenwert der Leistungsdichte L in kW/m$^2$ aktive Elektrodenoberfläche dividiert durch den Zahlenwert D des absoluten Druckes in bar bei einseitiger Kühlung zwischen 80 und 130, bei doppelseitiger Kühlung zwischen 320 und 650 liegt.

## Claims

1. Process for operating an ozone installation having an electrical ozone generator, through whose discharge gaps a feed gas containing nitrogen and oxygen is passed under elevated pressure, and a pressure generator in the flow path of the feed gas, characterised in that the feed gas contains 30 to 98% by weight, preferably 85 to 95% by weight, of oxygen, the remainder being essentially nitrogen, the ozone generator has approximately the same gap width of at most 1 mm everywhere and is operated at a power density of between 2.5 and 5 kW per $m^2$ of active electrode surface area in the case of cooling of the electrodes on one side, and at a power density, which is greater by a factor of 4 to 5, in the case of cooling of the electrodes on both sides, and in that the pressure in the ozone generator is maintained at a value of at least 2 bar absolute by means of a pressure generator which is located upstream of the ozone generator, as viewed in the direction of flow of the feed gas.

2. Process according to Claim 1, characterised in that the product of the numerical value M of the oxygen concentration in % by weight in the feed gas and the numerical value of the power density L in $kW/m^2$ of active electrode surface area, divided by the numerical value D of the absolute pressure in bar, is between 80 and 130 in the case of cooling on one side and between 320 and 650 in the case of cooling on both sides.

## Revendications

1. Procédé de conduite d'une installation de production d'ozone avec un générateur d'ozone électrique, comportant un intervalle de décharge à travers lequel on peut faire circuler un gaz de base sous pression élevée contenant de l'azote et de l'oxygène, et avec un générateur de pression sur le trajet du gaz de base, caractérisé en ce que le gaz de base contient de 30 à 98 % en poids, de préférence 85 à 95 % en poids d'oxygène, le reste étant essentiellement de l'azote, en ce que le générateur d'ozone présente une largeur de intervalle sensiblement égale partout de 1 mm au maximum et fonctionne avec une densité de puissance comprise entre 2,5 et 5 kW par $m^2$ de surface active d'électrode pour un refroidissement unilatéral des électrodes, et avec une densité de puissance plus élevée d'un facteur 4 à 5 pour un refroidissement bilatéral des électrodes, et en ce que la pression absolue dans le générateur d'ozone est maintenue dans ce dernier à une valeur d'au moins 2 bar par un générateur de pression qui, en regardant dans le sens de l'écoulement du gaz de base, est disposé avant le générateur d'ozone.

2. Procédé suivant la revendication 1, caractérisé en ce que le produit de la valeur chiffrée M de la concentration en oxygène dans le gaz de base, en % en poids, et de la valeur chiffrée de la densité de puissance L en $kW/m^2$ de surface active d'électrode, divisé par la valeur chiffrée D de la pression absolue en bar, est compris entre 80 et 130 pour un refroidissement unilatéral, et entre 320 et 650 pour un refroidissement bilatéral.